# EUROPEAN PATENT APPLICATION

(11) **EP 4 769 929 A1**
(43) Date of publication of application: **01.07.2026**
(21) Application number: 24902988.5
(22) Date of filing: 13.12.2024
(51) Int. Cl.: H02M 7/483

(54) **POWER MODULE UNIT, ENERGY STORAGE VALVE MODULE, ENERGY STORAGE VALVE, AND ENERGY STORAGE DEVICE**

(30) Priority: 15.12.2023 CN 202311734234
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: CHEN, Huifeng, Shanghai 200241 (CN); HUANG, Xisheng, Shanghai 200241 (CN); PENG, Hao, Shanghai 200241 (CN); LEI, Zhifang, Shanghai 200241 (CN); LU, Yanhua, Shanghai 200241 (CN); YU, Dongxu, Shanghai 200241 (CN)
(74) Representative: Gong, Jinping
(86) International application number: PCT/CN2024/139340
(87) International publication number: WO 2025/124573

(57) **Abstract**

This application relates to a power module unit, an energy storage valve module, an energy storage valve, and an energy storage device. The power module unit includes an upper bridge arm switching tube and a lower bridge arm switching tube connected in series; where a load capacity operating parameter of the upper bridge arm switching tube is greater than a load capacity operating parameter of the lower bridge arm switching tube. It can be seen that embodiments of this application achieve an asymmetrically configured power module unit, which, while meeting the load capacity requirements of the power module unit for the upper and lower bridge arm switching tubes, can not only improve the utilization rate of the lower bridge arm switching tube but also save the cost of components in the power module unit, thereby facilitating cost savings for the energy storage valve module.

## Description

### CROSS-REFERENCE

This application cites Chinese Patent Application No. 2023117342344, filed on December 15, 2023 and entitled "POWER MODULE UNIT, ENERGY STORAGE VALVE MODULE, ENERGY STORAGE VALVE, AND ENERGY STORAGE DEVICE," which is incorporated herein by reference in its entirety.

### TECHNICAL FIELD

This application relates to the field of energy storage technologies, and in particular, to a power module unit, an energy storage valve module, an energy storage valve, and an energy storage device.

### BACKGROUND

With the development of energy storage technology, direct-mounted energy storage valves have become relatively important components in energy storage devices. Direct-mounted energy storage valves can cooperate with converter valves to exchange energy with an Alternating-current grid.

In the related art, a direct-mounted energy storage valve includes multiple identical energy storage valve modules. Each energy storage valve module may include a power module unit and an energy storage unit, where the power module unit includes multiple switching tubes. However, the power module units in the related art are relatively high-cost, which in turn makes the energy storage valve modules costly.

### SUMMARY

In view of the above issues, this application provides a power module unit, an energy storage valve module, an energy storage valve, and an energy storage device, capable of addressing the problem of high costs of energy storage valve modules in the related art.

In a first aspect, this application provides a power module unit, including: an upper bridge arm switching tube and a lower bridge arm switching tube connected in series; where a load capacity operating parameter of the upper bridge arm switching tube is greater than a load capacity operating parameter of the lower bridge arm switching tube.

In embodiments of this application, it is proposed that the load capacity operating parameter of the upper bridge arm switching tube of the power module unit may be greater than the load capacity operating parameter of the lower bridge arm switching tube, achieving an asymmetrically configured power module unit. Since the cost of a switching tube is generally positively correlated with the magnitude of the load capacity operating parameter of the switching tube, in the embodiments of this application, by using a lower bridge arm switching tube with a smaller load capacity operating parameter while meeting the load capacity requirements of the power module unit for the upper and lower bridge arm switching tubes, not only can the utilization rate of the lower bridge arm switching tube be improved, but the cost of components in the power module unit can also be saved, thereby facilitating cost savings for the energy storage valve module.

In some embodiments, the load capacity operating parameter includes nominal current, and/or operating junction temperature.

In some embodiments, the upper bridge arm switching tube includes an upper bridge arm fully-controlled tube and an upper bridge arm unidirectional conduction tube connected in parallel; and the lower bridge arm switching tube includes a lower bridge arm fully-controlled tube and a lower bridge arm unidirectional conduction tube connected in parallel;
where a load capacity operating parameter of the upper bridge arm fully-controlled tube is greater than a load capacity operating parameter of the lower bridge arm fully-controlled tube; and/or
a load capacity operating parameter of the upper bridge arm unidirectional conduction tube is greater than a load capacity operating parameter of the lower bridge arm unidirectional conduction tube.

In the embodiments of this application, the load capacity operating parameter of the upper bridge arm fully-controlled tube is greater than the load capacity operating parameter of the lower bridge arm fully-controlled tube; and/or the load capacity operating parameter of the upper bridge arm unidirectional conduction tube is greater than the load capacity operating parameter of the lower bridge arm unidirectional conduction tube. Thus, the load capacity operating parameter of the upper bridge arm switching tube is greater than the load capacity operating parameter of the lower bridge arm switching tube. In this way, on the premise of meeting the load capacity requirements of the power module unit for the upper and lower bridge arm switching tubes, the cost of power devices in the power module unit can be saved.

In some embodiments, the lower bridge arm fully-controlled tube and the lower bridge arm unidirectional conduction tube in the lower bridge arm switching tube are integrated as an integrated switching tube; and/or
the upper bridge arm fully-controlled tube and the upper bridge arm unidirectional conduction tube in the upper bridge arm switching tube are either discrete switching tubes or integrated switching tubes.

In the embodiments of this application, the upper bridge arm fully-controlled tube and the upper bridge arm unidirectional conduction tube in the upper bridge arm switching tube are discrete switching tubes, which facilitates heat dissipation of the upper bridge arm switching tube. Additionally, the upper bridge arm fully-controlled tube and the upper bridge arm unidirectional conduction tube in the upper bridge arm switching tube are an integrated switching tubes, and/or the lower bridge arm fully-controlled tube and the lower bridge arm unidirectional conduction tube in the lower bridge arm switching tube are integrated as an integrated switching tube, which facilitates further savings in the cost of components in the power module unit.

In some embodiments, the lower bridge arm fully-controlled tube and the lower bridge arm unidirectional conduction tube are integrated as an integrated switching tube through vertical press-fitting connection, which can reduce the space occupied by the lower bridge arm switching tube in the power module unit, thereby facilitating the miniaturization of the power module unit.

In some embodiments, the upper bridge arm fully-controlled tube is a press-fitted type fully-controlled tube, and the lower bridge arm fully-controlled tube is a press-fitted type fully-controlled tube; and/or the upper bridge arm unidirectional conduction tube is a press-fitted type unidirectional conduction tube, and the lower bridge arm unidirectional conduction tube is a press-fitted type unidirectional conduction tube, which helps improve the stability of the power module unit, thereby helping improve the stability of the energy storage valve module to which the power module unit belongs.

In some embodiments, a cooling plate parameter of an upper cooling plate connected to the upper bridge arm switching tube is greater than a cooling plate parameter of a lower cooling plate connected to the lower bridge arm switching tube, so that the cooling capacity of the upper cooling plate can meet the cooling requirements of the upper bridge arm switching tube, and the cooling capacity of the lower cooling plate can meet the cooling requirements of the lower cooling plate, thereby saving cooling plate costs.

In some embodiments, the cooling plate parameter includes at least one of the following: the number of cooling plates, contact area between a cooling plate and a switching tube, and cooling parameter of a cooling medium in a cooling plate.

In some embodiments, a first end of the upper bridge arm fully-controlled tube and a first end of the upper bridge arm unidirectional conduction tube are both connected to a first cooling plate, a second end of the upper bridge arm fully-controlled tube is connected to a second cooling plate, and a second end of the upper bridge arm unidirectional conduction tube is connected to a third cooling plate; and
a first end of the lower bridge arm switching tube is connected to the third cooling plate, and a second end of the lower bridge arm switching tube is connected to a fourth cooling plate.

In some embodiments, the power module unit further includes a first bypass unit and a second bypass unit connected in parallel with the lower bridge arm switching tube.

In the embodiments of this application, one cooling plate is connected to each end of the lower bridge arm switching tube, and the number of cooling plates is reduced, which not only can simplify the water-cooling system design and save the cost of the water-cooling system but also can help reduce the weight and size of the power module unit, thereby reducing the weight and size of the energy storage valve module.

In some embodiments, the upper bridge arm switching tube is an upper bridge arm of a half-bridge circuit, and the lower bridge arm switching tube is a lower bridge arm of the half-bridge circuit.

In a second aspect, this application provides an energy storage valve module, including an energy storage unit and the power module unit according to any one of the first aspect; where one end of the energy storage unit is connected to one end of the upper bridge arm switching tube, and another end of the energy storage unit is connected to one end of the lower bridge arm switching tube;
where a switching state of the upper bridge arm switching tube is used to control an inserted state of an operating condition of the energy storage valve module.

In a third aspect, this application provides an energy storage valve, including multiple energy storage valve modules according to any one of the second aspect; where the multiple energy storage valve modules are connected in series to a main circuit of the energy storage valve.

In a fourth aspect, this application provides an energy storage device, including the energy storage valve according to the third aspect.

The above description is only an overview of the technical solutions of this application. To understand the technical means of this application more clearly, it can be implemented in accordance with the content of the specification, and to make the above and other objectives, features, and advantages of this application more apparent and understandable, specific embodiments of this application are provided below.

### DESCRIPTION OF DRAWINGS

By reading the detailed description of the preferred embodiments below, various other advantages and benefits will become clear to those skilled in the art. The accompanying drawings are only for the purpose of illustrating the preferred embodiments and are not considered to limit this application. Throughout the accompanying drawings, the same reference numerals denote the same components. In the drawings:
FIG. 1 is a schematic structural diagram of a power module unit according to some embodiments of this application;
FIG. 2 is a schematic structural diagram of a power module unit according to some other embodiments of this application;
FIG. 3 is a schematic structural diagram of a power module unit according to some other embodiments of this application;
FIG. 4 is a schematic structural diagram of a power module unit according to some other embodiments of this application;
FIG. 5 is a schematic structural diagram of a power module unit according to some other embodiments of this application;
FIG. 6 is a schematic structural diagram of a power module unit according to some other embodiments of this application;
FIG. 7 is a schematic structural diagram of a power module unit according to some other embodiments of this application;
FIG. 8 is a schematic structural diagram of an energy storage valve module according to some embodiments of this application;
FIG. 9 is a schematic structural diagram of an energy storage valve module according to some other embodiments of this application;
FIG. 10 is a schematic diagram of the current path of an energy storage valve module in an inserted state of a discharge condition according to an embodiment of this application;
FIG. 11 is a schematic diagram of the current path of an energy storage valve module in a bypassed state of a discharge condition according to an embodiment of this application;
FIG. 12 is a schematic diagram of the current path of an energy storage valve module in an inserted state of a charge condition according to an embodiment of this application;
FIG. 13 is a schematic diagram of the current path of an energy storage valve module in a bypassed state of a charge condition according to an embodiment of this application;
FIG. 14 is a schematic diagram of the loss of different switching tubes of an energy storage valve module in a discharge condition according to an embodiment of this application;
FIG. 15 is a schematic diagram of the loss of different switching tubes of an energy storage valve module in a charge condition according to an embodiment of this application; and
FIG. 16 is a schematic structural diagram of an energy storage valve module according to some other embodiments of this application.

### DETAILED DESCRIPTION

The embodiments of the technical solutions of this application will be described in detail below in conjunction with the accompanying drawings. The following embodiments are only used to more clearly illustrate the technical solutions of this application and are merely examples, not intended to limit the scope of protection of this application.

Unless otherwise defined, all technical and scientific terms used herein have the same meaning as commonly understood by those skilled in the technical field of this application; the terms used herein are only for the purpose of describing specific embodiments and are not intended to limit this application; and the terms "including" and any variations thereof in the specification, claims, and description of the accompanying drawings of this application are intended to cover non-exclusive inclusion.

In the description of the embodiments of this application, the technical terms "first," "second," and the like are only used to distinguish different objects and should not be understood as indicating or implying relative importance or implicitly indicating the number, specific order, or primary-secondary relationship of the indicated technical features. In the description of the embodiments of this application, "multiple" means two or more (including two), unless otherwise explicitly and specifically limited.

In the related art, a direct-mounted energy storage valve includes multiple identical energy storage valve modules. Each energy storage valve module may include a power module unit and an energy storage unit, where the power module unit may include identical upper bridge arm switching tubes and identical lower bridge arm switching tubes. However, the power module units in the related art are relatively high-cost, which in turn makes the energy storage valve modules costly.

To facilitate understanding, some parameters involved in the embodiments of this application are introduced first in the embodiments of this application.

A load capacity operating parameter of a switching tube involved in the embodiments of this application can be used to indicate a load operation capability of the switching tube. A larger load capacity operating parameter of the switching tube indicates a greater load operation capability of the switching tube. Additionally, the cost of a switching tube is generally positively correlated with the magnitude of the load capacity operating parameter of the switching tube; and a larger load capacity operating parameter indicates a higher cost of the switching tube.

A cooling plate parameter of a cooling plate involved in the embodiments of this application can be used to indicate a cooling capacity of the cooling plate. A larger the cooling plate parameter indicates a greater cooling capacity of the cooling plate. Additionally, the cost of a cooling plate is generally positively correlated with the magnitude of its cooling plate parameter; and a larger cooling plate parameter indicates a higher cost of the cooling plate.

To address the problem in the related art where the high cost of power module units results in high costs for energy storage valve modules, the embodiments of this application consider that duration of an energy storage valve module in an inserted state is generally longer than duration of the energy storage valve module in a bypassed state, and under the condition that the energy storage valve module is in the inserted state, regardless of the charge condition or the discharge condition, the upper bridge arm switching tube of the power module unit in the energy storage valve module needs to be used, that is, the upper bridge arm switching tube of the power module unit in the energy storage valve module is in a heavy-load state, while the lower bridge arm switching tube is in a light-load state. Therefore, the embodiments of this application propose that the upper bridge arm switching tube and the lower bridge arm switching tube of the power module unit adopt switching tubes with different load capacity operating parameters, where a load capacity operating parameter of the upper bridge arm switching tube may be greater than a load capacity operating parameter of the lower bridge arm switching tube. Since the cost of a switching tube is generally positively correlated with the magnitude of the load capacity operating parameter of the switching tube, in the embodiments of this application, on the premise of meeting the load capacity requirements of the power module unit for the upper and lower bridge arm switching tubes, a lower bridge arm switching tube with a smaller load capacity operating parameter is used, not only can the utilization rate of the lower bridge arm switching tube be improved, but the cost of components in the power module unit can also be saved, thereby facilitating cost savings for the energy storage valve module.

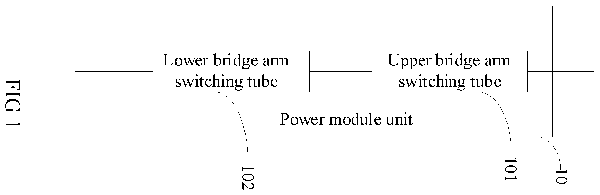

In some embodiments, FIG. 1 is a schematic structural diagram of a power module unit according to some embodiments of this application. As shown in FIG. 1, the power module unit 10 of the embodiments of this application may include, but is not limited to, an upper bridge arm switching tube 101 and a lower bridge arm switching tube 102 connected in series.

It should be understood that the upper bridge arm switching tube 101 and the lower bridge arm switching tube 102 in the power module unit 10 of the embodiments of this application can switch between different switching states to make the energy storage valve module including the power module unit 10 in an inserted state or a bypassed state. For example, the switching state of the upper bridge arm switching tube 101 can be used to control an inserted state of an operating condition of the energy storage valve module including the power module unit 10. The operating conditions of the energy storage valve module in the embodiments of this application may include a charge condition and a discharge condition.

Considering that the duration of the energy storage valve module in the inserted state is generally longer than the duration of the energy storage valve module in the bypassed state, and under the condition that the energy storage valve module is in the inserted state, regardless of the charge condition or the discharge condition, the upper bridge arm switching tube of the power module unit in the energy storage valve module is in a heavy-load state, while the lower bridge arm switching tube is in a light-load state, that is, the conduction duration of the upper bridge arm switching tube is generally longer than the conduction duration of the lower bridge arm switching tube. Therefore, the load capacity operating parameter of the upper bridge arm switching tube in the embodiments of this application may be greater than the load capacity operating parameter of the lower bridge arm switching tube to meet the load capacity requirements of the power module unit for the upper and lower bridge arm switching tubes of the power module unit.

A load capacity operating parameter of a switching tube in the embodiments of this application can be used to indicate a load operation capability of the switching tube. A larger load capacity operating parameter of the switching tube indicates a greater load operation capability of the switching tube.

For example, the load capacity operating parameter in the embodiments of this application may include, but is not limited to, nominal current and/or operating junction temperature.

For example, a nominal current of the upper bridge arm switching tube 101 is greater than a nominal current of the lower bridge arm switching tube 102.

For another example, an operating junction temperature of the upper bridge arm switching tube 101 is greater than an operating junction temperature of the lower bridge arm switching tube 102.

For another example, a nominal current of the upper bridge arm switching tube 101 is greater than a nominal current of the lower bridge arm switching tube 102, and an operating junction temperature of the upper bridge arm switching tube 101 is greater than an operating junction temperature of the lower bridge arm switching tube 102.

It can be seen that the embodiments of this application propose that the load capacity operating parameter of the upper bridge arm switching tube of the power module unit may be greater than the load capacity operating parameter of the lower bridge arm switching tube, achieving an asymmetrically configured power module unit. Since the cost of a switching tube is generally positively correlated with the magnitude of the load capacity operating parameter of the switching tube, in the embodiments of this application, by using a lower bridge arm switching tube with a smaller load capacity operating parameter while meeting the load capacity requirements of the power module unit for the upper and lower bridge arm switching tubes, not only can the utilization rate of the lower bridge arm switching tube be improved, but the cost of components in the power module unit can also be saved, thereby facilitating cost savings for the energy storage valve module.

For example, the power module unit in the embodiments of this application may include, but is not limited to, a half-bridge circuit or a full-bridge circuit.

For example, if the power module unit is a half-bridge circuit, the power module unit in the embodiments of this application may include one set of upper bridge arm switching tube and lower bridge arm switching tube connected in series, where the upper bridge arm switching tube may be an upper bridge arm of the half-bridge circuit, and the lower bridge arm switching tube may be a lower bridge arm of the half-bridge circuit.

For another example, if the power module unit is a full-bridge circuit, the power module unit in the embodiments of this application may include two sets of upper bridge arm switching tubes and lower bridge arm switching tubes, where the two upper bridge arm switching tubes may be two upper bridge arms of the full-bridge circuit, and the two lower bridge arm switching tubes may be two lower bridge arms of the full-bridge circuit.

For example, any switching tube involved in the embodiments of this application may include, but is not limited to, a press-fitted type switching tube, a welded type switching tube, or a modular type switching tube.

In summary, the power module unit in the embodiments of this application includes the upper bridge arm switching tube and the lower bridge arm switching tube connected in series; where the load capacity operating parameter of the upper bridge arm switching tube is greater than the load capacity operating parameter of the lower bridge arm switching tube. It can be seen that the embodiments of this application propose that the load capacity operating parameter of the upper bridge arm switching tube of the power module unit may be greater than the load capacity operating parameter of the lower bridge arm switching tube, achieving an asymmetrically configured power module unit. Since the cost of a switching tube is generally positively correlated with the magnitude of the load capacity operating parameter of the switching tube, in the embodiments of this application, by using a lower bridge arm switching tube with a smaller load capacity operating parameter while meeting the load capacity requirements of the power module unit for the upper and lower bridge arm switching tubes, not only can the utilization rate of the lower bridge arm switching tube be improved, but the cost of components in the power module unit can also be saved, thereby facilitating cost savings for the energy storage valve module.

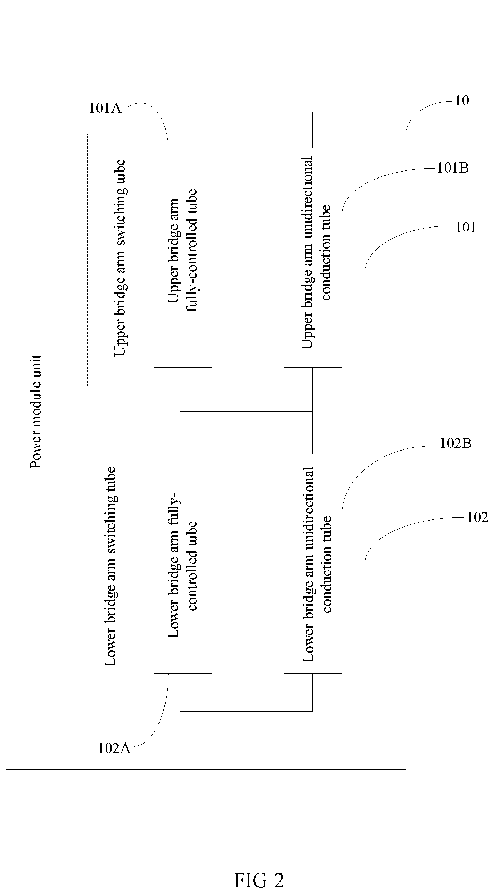

In some embodiments, FIG. 2 is a schematic structural diagram of a power module unit according to some other embodiments of this application. Based on the above embodiments, the embodiments of this application provide an exemplary introduction to the implementation of the upper bridge arm switching tube 101 and the lower bridge arm switching tube 102. As shown in FIG. 2, the upper bridge arm switching tube 101 of the embodiments of this application may include an upper bridge arm fully-controlled tube 101A and an upper bridge arm unidirectional conduction tube 101B connected in parallel; and the lower bridge arm switching tube 102 may include a lower bridge arm fully-controlled tube 102A and a lower bridge arm unidirectional conduction tube 102B.

For example, any fully-controlled tube involved in the embodiments of this application may include, but is not limited to, an insulated gate bipolar transistor (Insulated Gate Bipolar Transistor, IGBT) or a metal-oxide-semiconductor field-effect transistor (Metal-Oxide-Semiconductor Field-Effect Transistor, MOSFET). Any unidirectional conduction tube in the embodiments of this application may include, but is not limited to, a diode.

In the embodiments of this application, a load capacity operating parameter of the upper bridge arm fully-controlled tube 101A may be greater than a load capacity operating parameter of the lower bridge arm fully-controlled tube 102A, and/or a load capacity operating parameter of the upper bridge arm unidirectional conduction tube 101B may be greater than a load capacity operating parameter of the lower bridge arm unidirectional conduction tube 102B, so that the load capacity operating parameter of the upper bridge arm switching tube is greater than the load capacity operating parameter of the lower bridge arm switching tube, thereby saving the power device cost of the power module unit while meeting the load capacity requirements of the power module unit for the upper and lower bridge arm switching tubes.

Considering that the upper bridge arm switching tube is in a heavy-load state and the lower bridge arm switching tube is in a light-load state, in other words, the conduction duration of the upper bridge arm switching tube is generally longer than the conduction duration of the lower bridge arm switching tube, the upper bridge arm fully-controlled tube and the upper bridge arm unidirectional conduction tube in the upper bridge arm switching tube in the embodiments of this application may be discrete switching tubes, which facilitates heat dissipation of the upper bridge arm switching tube.

In one possible implementation, the lower bridge arm fully-controlled tube and the lower bridge arm unidirectional conduction tube in the lower bridge arm switching tube in the embodiments of this application may be discrete switching tubes, which facilitates heat dissipation of the lower bridge arm switching tube.

In another possible implementation, the lower bridge arm fully-controlled tube and the lower bridge arm unidirectional conduction tube in the lower bridge arm switching tube in the embodiments of this application may be integrated as an integrated switching tube. Since the cost of discrete switching tubes is generally higher than the cost of integrated switching tubes, in the embodiments of this application, an integrated switching tube is used for the lower bridge arm switching tube, which facilitates further savings in the cost of components in the power module unit.

For example, in the embodiments of this application, the lower bridge arm fully-controlled tube and the lower bridge arm unidirectional conduction tube in the lower bridge arm switching tube may be integrated as an integrated switching tube through vertical press-fitting connection, which can reduce the space occupied by the lower bridge arm switching tube in the power module unit, thereby facilitating the miniaturization of the power module unit. Certainly, the lower bridge arm fully-controlled tube and the lower bridge arm unidirectional conduction tube may also be integrated as an integrated switching tube through other methods (for example, horizontal press-connection, and the like).

It should be noted that, to further save the cost of components in the power module unit, the upper bridge arm fully-controlled tube and the upper bridge arm unidirectional conduction tube in the upper bridge arm switching tube in the embodiments of this application may alternatively be an integrated switching tube.

Considering the characteristics of press-fitted type switching tubes, such as higher current withstand capability and no main circuit failures even if damaged, in the embodiments of this application, the upper bridge arm fully-controlled tube 101A and/or the lower bridge arm fully-controlled tube 102A may be a press-fitted type fully-controlled tube; and/or the upper bridge arm unidirectional conduction tube 101B and/or the lower bridge arm unidirectional conduction tube 102B may be a press-fitted type unidirectional conduction tube, which helps improve the stability of the power module unit, thereby helping improve the stability of the energy storage valve module to which the power module unit belongs.

It should be understood that, when the power module unit 10 is a half-bridge circuit, the power module unit 10 in the embodiments of this application may include one set of upper bridge arm switching tube 101 and lower bridge arm switching tube 102 connected in series.

When the power module unit 10 is a full-bridge circuit, the power module unit 10 in the embodiments of this application may include two sets of upper bridge arm switching tubes and lower bridge arm switching tubes (not shown in FIG. 2). The upper bridge arm switching tube and the lower bridge arm switching tube in each set are connected in series, while the two sets are connected in parallel.

In one embodiment, based on the above embodiments, considering that the power module unit generates high heat, a water-cooling system is usually required to reduce the temperature of the power module unit. The embodiments of this application provide an exemplary introduction to the relevant content of the water-cooling system of the power module unit.

Considering that the upper bridge arm switching tube is in a heavy-load state and the lower bridge arm switching tube is in a light-load state, in other words, the conduction duration of the upper bridge arm switching tube is generally longer than the conduction duration of the lower bridge arm switching tube, and the heat generation of the upper bridge arm switching tube is generally higher than the heat generation of the lower bridge arm switching tube, in the embodiments of this application, a cooling plate parameter of the upper cooling plate connected to the upper bridge arm switching tube is greater than a cooling plate parameter of the lower cooling plate connected to the lower bridge arm switching tube, so that the cooling capacity of the upper cooling plate can meet the cooling requirements of the upper bridge arm switching tube, and the cooling capacity of the lower cooling plate can meet the cooling requirements of the lower cooling plate, thereby saving cooling plate costs.

For example, any cooling plate involved in the embodiments of this application may include a metal plate with flow-through holes, such as an aluminum plate or a steel plate with flow-through holes. For another example, any cooling plate involved in the embodiments of this application may include a non-metal plate with flow-through holes, and electrodes may be provided on two sides of the non-metal plate to facilitate connection with other components in the power module unit. Certainly, the cooling plate in the embodiments of this application may also include other forms of cooling plates.

For example, the cooling plate parameter in the embodiments of this application may include, but is not limited to, at least one of the following: the number of cooling plates, contact area between the cooling plate and the switching tube, and cooling parameter of a cooling medium in the cooling plate. The cooling parameter of the cooling medium may include, but is not limited to, at least one of the following: flow rate, specific heat capacity, and thermal conductivity.

To facilitate understanding, the following embodiments of this application take the cooling plate parameter including the number of cooling plates as an example to provide an exemplary introduction to the arrangement of cooling plates in the power module unit.

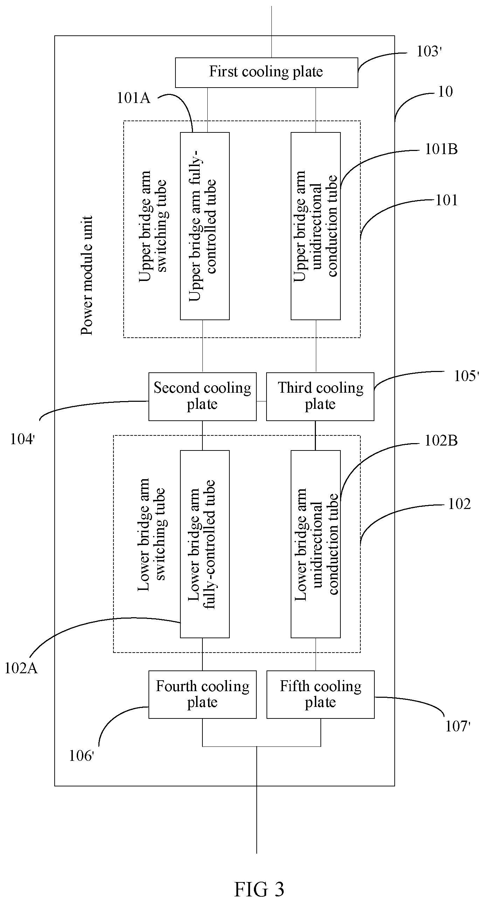

In one possible implementation, the upper bridge arm fully-controlled tube and the upper bridge arm unidirectional conduction tube in the upper bridge arm switching tube are discrete switching tubes, and the lower bridge arm fully-controlled tube and the lower bridge arm unidirectional conduction tube in the lower bridge arm switching tube are discrete switching tubes. FIG. 3 is a schematic structural diagram of a power module unit according to some other embodiments of this application. As shown in FIG. 3, in the embodiments of this application, a first end of the upper bridge arm fully-controlled tube 101A and a first end of the upper bridge arm unidirectional conduction tube 101B may both be connected to a first cooling plate 103', a second end of the upper bridge arm fully-controlled tube 101A and a first end of the lower bridge arm fully-controlled tube 102A may both be connected to a second cooling plate 104', a second end of the upper bridge arm unidirectional conduction tube 101B and a first end of the lower bridge arm unidirectional conduction tube 102B may both be connected to a third cooling plate 105', a second end of the lower bridge arm fully-controlled tube 102A may be connected to a fourth cooling plate 106', and a second end of the lower bridge arm unidirectional conduction tube 102B may be connected to a fifth cooling plate 107'.

It should be understood that the first cooling plate 103', the second cooling plate 104', and the third cooling plate 105' in the embodiments of this application may be upper cooling plates, and the fourth cooling plate 106' and the fifth cooling plate 107' in the embodiments of this application may be lower cooling plates. It can be seen that the number of upper cooling plates is greater than the number of lower cooling plates in the embodiments of this application.

It should be noted that the connection method between the upper and lower bridge arm switching tubes and the cooling plates in the power module unit in the embodiments of this application may also adopt other methods, for example, the second end of the upper bridge arm fully-controlled tube 101A and the first end of the lower bridge arm unidirectional conduction tube 102B may both be connected to the second cooling plate 104, and the second end of the upper bridge arm unidirectional conduction tube 101B and the first end of the lower bridge arm fully-controlled tube 102A may both be connected to the third cooling plate 105 (not shown in FIG. 3).

To facilitate understanding, the embodiments of this application take the power module unit as a half-bridge circuit as an example to provide an exemplary introduction to the arrangement of cooling plates.

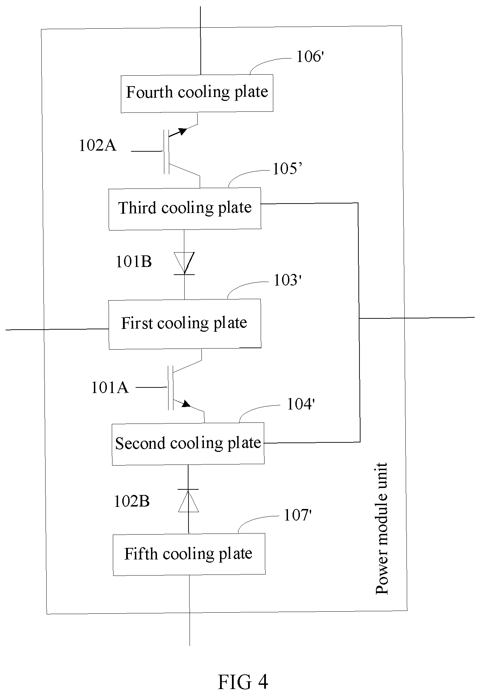

FIG. 4 is a schematic structural diagram of a power module unit according to some other embodiments of this application. As shown in FIG. 4, in the embodiments of this application, the upper bridge arm switching tube may include an upper bridge arm fully-controlled tube 101A and an upper bridge arm unidirectional conduction tube 101B; the lower bridge arm switching tube may include a lower bridge arm fully-controlled tube 102A and a lower bridge arm unidirectional conduction tube 102B, where the upper bridge arm fully-controlled tube 101A and the upper bridge arm unidirectional conduction tube 101B are discrete switching tubes, and the lower bridge arm fully-controlled tube 102A and the lower bridge arm unidirectional conduction tube 102B are discrete switching tubes. It should be noted that FIG. 4 illustrates the fully-controlled tube as an IGBT and the unidirectional conduction tube as a diode as an example.

For example, in the embodiments of this application, the first end of the upper bridge arm fully-controlled tube 101A and the first end (that is, negative electrode) of the upper bridge arm unidirectional conduction tube 101B may both be connected to the first cooling plate 103', the second end of the upper bridge arm fully-controlled tube 101A and the first end of the lower bridge arm unidirectional conduction tube 102B may both be connected to the second cooling plate 104', the second end (that is, positive electrode) of the upper bridge arm unidirectional conduction tube 101B and the first end (that is, negative electrode) of the lower bridge arm fully-controlled tube 102A may both be connected to the third cooling plate 105', the second end of the lower bridge arm fully-controlled tube 102A may be connected to the fourth cooling plate 106', and the second end (that is, positive electrode) of the lower bridge arm unidirectional conduction tube 102B may be connected to the fifth cooling plate 107'.

It can be seen that in this implementation, when the upper bridge arm fully-controlled tube and the upper bridge arm unidirectional conduction tube in the upper bridge arm switching tube are discrete switching tubes, and the lower bridge arm fully-controlled tube and the lower bridge arm unidirectional conduction tube in the lower bridge arm switching tube are discrete switching tubes, by arranging multiple cooling plates, it may be more conducive to the heat dissipation of the upper bridge arm switching tube, thereby helping improve the heat dissipation efficiency of the power module unit.

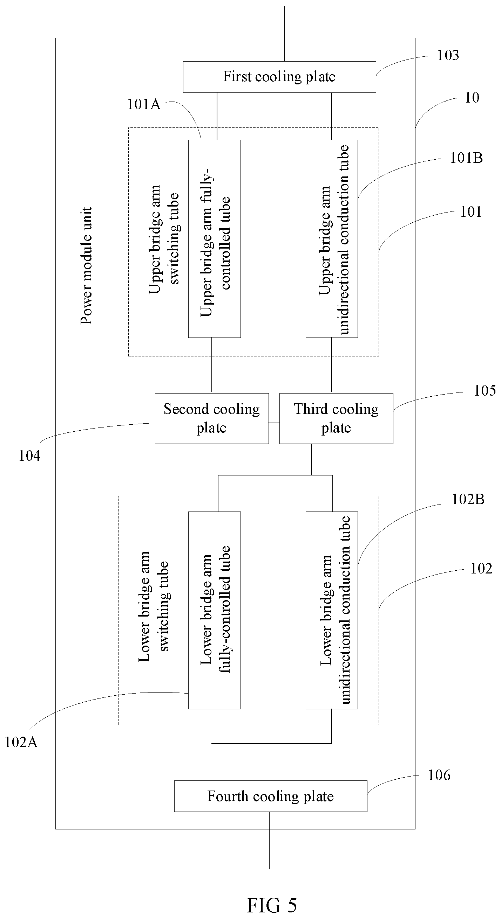

In another possible implementation, the upper bridge arm fully-controlled tube and the upper bridge arm unidirectional conduction tube in the upper bridge arm switching tube are discrete switching tubes, and the lower bridge arm fully-controlled tube and the lower bridge arm unidirectional conduction tube in the lower bridge arm switching tube are integrated as an integrated switching tube. FIG. 5 is a schematic structural diagram of a power module unit according to some other embodiments of this application. As shown in FIG. 5, in the embodiments of this application, a first end of the upper bridge arm fully-controlled tube 101A and a first end of the upper bridge arm unidirectional conduction tube 101B are both connected to a first cooling plate 103, a second end of the upper bridge arm fully-controlled tube 101A is connected to a second cooling plate 104, and a second end of the upper bridge arm unidirectional conduction tube 101B is connected to a third cooling plate 105; a first end of the lower bridge arm switching tube 102 is connected to the third cooling plate 105, and a second end of the lower bridge arm switching tube 102 is connected to a fourth cooling plate 106.

It should be understood that the first cooling plate 103, the second cooling plate 104, and the third cooling plate 105 in the embodiments of this application may be upper cooling plates, and the fourth cooling plate 106 in the embodiments of this application may be a lower cooling plate. It can be seen that the number of upper cooling plates is greater than the number of lower cooling plates in the embodiments of this application.

To facilitate understanding, the embodiments of this application take the power module unit as a half-bridge circuit as an example to provide an exemplary introduction to the arrangement of cooling plates.

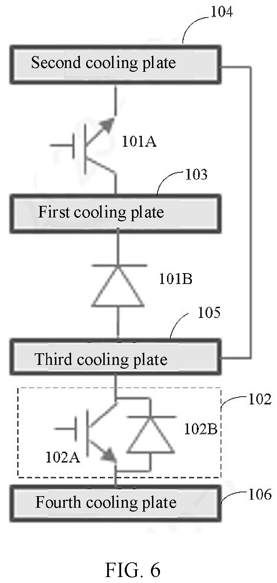

FIG. 6 is a schematic structural diagram of a power module unit according to some other embodiments of this application. As shown in FIG. 6, in the embodiments of this application, the upper bridge arm switching tube may include an upper bridge arm fully-controlled tube 101A and an upper bridge arm unidirectional conduction tube 101B; and the lower bridge arm switching tube may include a lower bridge arm fully-controlled tube 102A and a lower bridge arm unidirectional conduction tube 102B; where the upper bridge arm fully-controlled tube 101A and the upper bridge arm unidirectional conduction tube 101B are discrete switching tubes, and the lower bridge arm fully-controlled tube 102A and the lower bridge arm unidirectional conduction tube 102B are integrated as an integrated switching tube. It should be noted that FIG. 6 illustrates the fully-controlled tube as an IGBT and the unidirectional conduction tube as a diode as an example.

For example, in the embodiments of this application, a first end of the upper bridge arm fully-controlled tube 101A and a first end (that is, negative electrode) of the upper bridge arm unidirectional conduction tube 101B are both connected to a first cooling plate 103, a second end of the upper bridge arm fully-controlled tube 101A is connected to a second cooling plate 104, and a second end (that is, positive electrode) of the upper bridge arm unidirectional conduction tube 101B is connected to a third cooling plate 105; a first end of the lower bridge arm switching tube 102 (that is, the lower bridge arm fully-controlled tube 102A and the lower bridge arm unidirectional conduction tube 102B) is connected to the third cooling plate 105, and a second end of the lower bridge arm switching tube 102 is connected to a fourth cooling plate 106.

It should be noted that the connection method between the upper and lower bridge arm switching tubes and the cooling plates in the embodiments of this application may also adopt other methods, for example, the first end of the lower bridge arm switching tube 102 in the embodiments of this application may be connected to the second cooling plate 104 (not shown in FIG. 5 and FIG. 6).

It can be seen that in this implementation, when the upper bridge arm fully-controlled tube and the upper bridge arm unidirectional conduction tube in the upper bridge arm switching tube are discrete switching tubes, and the lower bridge arm fully-controlled tube and the lower bridge arm unidirectional conduction tube in the lower bridge arm switching tube are integrated as an integrated switching tube, by connecting a cooling plate to each end of the lower bridge arm switching tube, the number of cooling plates is reduced, which not only can simplify the water-cooling system design and save water-cooling system costs but also can help reduce the weight and size of the power module unit, thereby reducing the weight and size of the energy storage valve module.

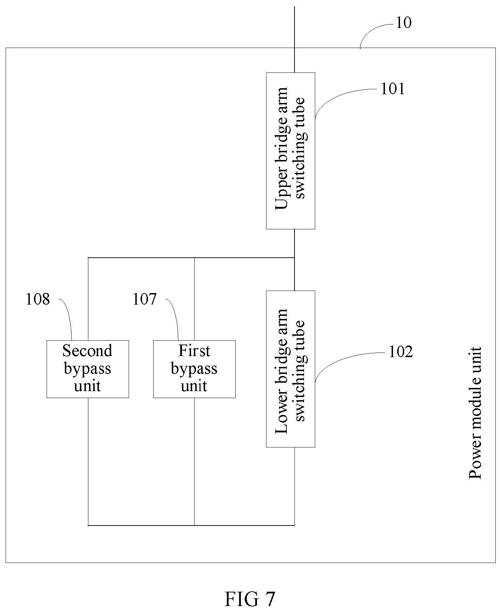

In some embodiments, FIG. 7 is a schematic structural diagram of a power module unit according to some other embodiments of this application. As shown in FIG. 7, the power module unit in the embodiments of this application may further include a first bypass unit 107 connected in parallel with the lower bridge arm switching tube 102. The first bypass unit 107 can be configured to control the energy storage valve module to which the power module unit belongs to be in a bypass state or a non-bypass state. For example, the first bypass unit 107 may include, but is not limited to, a bypass switch.

For example, when the first bypass unit 107 is in a conducting state, it can control the energy storage valve module to be in a bypass state; when the first bypass unit 107 is in an off state, it can control the energy storage valve module to be in a non-bypass state.

It should be noted that, typically, the first bypass unit 107 is in an off state, and in the case of a failure in the energy storage valve module, the first bypass unit 107 can be switched to a conducting state to control the energy storage valve module to be in a bypass state, facilitating maintenance of the energy storage valve module.

Based on the above embodiments, considering that the loss of the lower bridge arm switching tube 102 is significant when the energy storage valve module is in a bypass state, and/or the current-carrying capacity after a short-circuit failure is poor when the lower bridge arm fully-controlled tube and the lower bridge arm unidirectional conduction tube in the lower bridge arm switching tube 102 are integrated, as shown in FIG. 7, the power module unit in the embodiments of this application may further include a second bypass unit 108 connected in parallel with the lower bridge arm switching tube 102. For example, the second bypass unit 108 in the embodiments of this application may include, but is not limited to, a bypass thyristor.

The second bypass unit 108 is arranged in parallel with the first bypass unit 107 as a second circuit for bypass and short-circuit failure, so that when the energy storage valve module is in a bypass state, the current can flow through the first bypass unit 107 and the second bypass unit 108, thereby facilitating the protection of the power module unit.

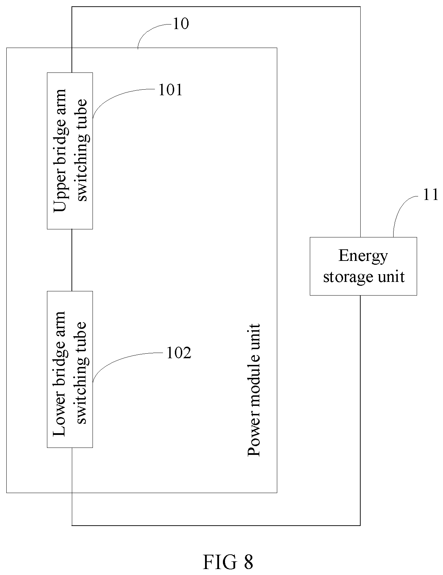

In some embodiments, based on the above embodiments, the embodiments of this application provide an exemplary introduction to the relevant content of the energy storage valve module including the power module unit. FIG. 8 is a schematic structural diagram of an energy storage valve module according to some embodiments of this application. As shown in FIG. 8, the energy storage valve module in the embodiments of this application may include an energy storage unit 11 and a power module unit 10. A structure of the power module unit 10 can refer to the relevant content in the above embodiments of this application.

One end of the energy storage unit 11 in the embodiments of this application may be connected to one end of the upper bridge arm switching tube 101, and another end of the energy storage unit 11 may be connected to one end of the lower bridge arm switching tube 102.

For example, the switching state of the upper bridge arm switching tube 101 in the embodiments of this application can be used to control an inserted state of an operating condition of the energy storage valve module; where the load capacity operating parameter of the upper bridge arm switching tube 101 is greater than the load capacity operating parameter of the lower bridge arm switching tube 102.

It can be seen that the embodiments of this application propose that the load capacity operating parameter of the upper bridge arm switching tube of the power module unit may be greater than the load capacity operating parameter of the lower bridge arm switching tube, achieving an asymmetrically configured power module unit. Since the cost of a switching tube is generally positively correlated with the magnitude of the load capacity operating parameter of the switching tube, in the embodiments of this application, by using a lower bridge arm switching tube with a smaller load capacity operating parameter while meeting the load capacity requirements of the power module unit for the upper and lower bridge arm switching tubes, not only can the utilization rate of the lower bridge arm switching tube be improved, but the cost of components in the power module unit can also be saved, thereby facilitating cost savings for the energy storage valve module.

In some embodiments, based on the above embodiments, to facilitate understanding, the following embodiments of this application take the power module unit as a half-bridge circuit, the fully-controlled tube as an IGBT, and the unidirectional conduction tube as a diode as an example to introduce the usage of switching tubes in the energy storage valve module including the power module unit under different operating conditions.

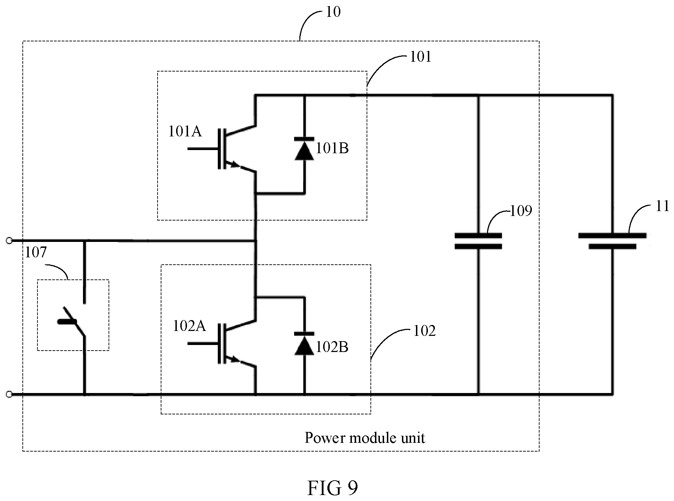

FIG. 9 is a schematic structural diagram of an energy storage valve module according to some other embodiments of this application. As shown in FIG. 9, the energy storage valve module in the embodiments of this application may include a power module unit 10 and an energy storage unit 11. The power module unit 10 may include an upper bridge arm switching tube 101, a lower bridge arm switching tube 102, a first bypass unit 107, and a supporting capacitor unit 109. The upper bridge arm switching tube 101 may include an upper bridge arm fully-controlled tube 101A and an upper bridge arm unidirectional conduction tube 101B; and the lower bridge arm switching tube 102 may include a lower bridge arm fully-controlled tube 102A and a lower bridge arm unidirectional conduction tube 102B.

The supporting capacitor unit 109 in these embodiments of this application can be configured to filter out high-frequency harmonics of the power module unit 10, and/or limit voltage spikes, thereby facilitating the reduction of switching losses.

For example, the supporting capacitor unit 106 in the embodiments of this application may include a supporting capacitor; certainly, it may also include other components.

The operating conditions of the energy storage valve module in the embodiments of this application may include a charge condition and a discharge condition, where each operating condition may include an inserted state or a bypassed state. The following embodiments of this application will respectively introduce the different states under different operating conditions of the energy storage valve module.

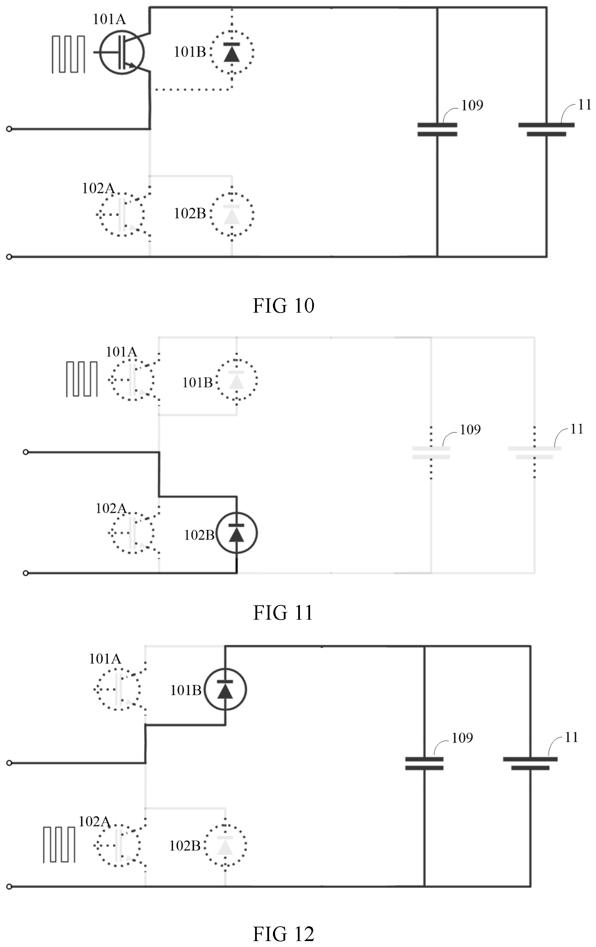

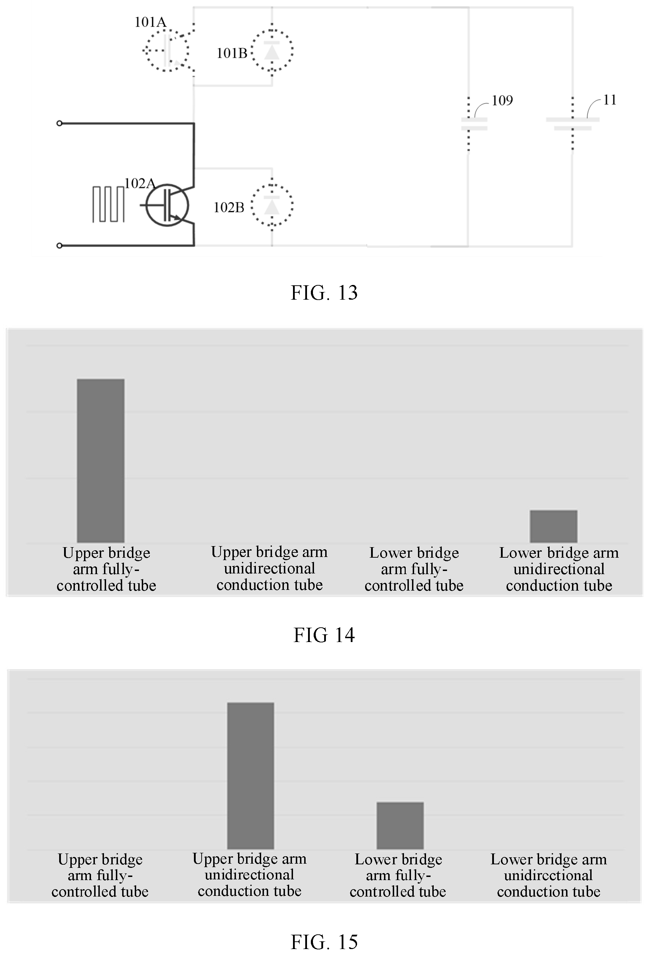

FIG. 10 is a schematic diagram of a current path of an energy storage valve module in an inserted state of a discharge condition according to an embodiment of this application, FIG. 11 is a schematic diagram of a current path of an energy storage valve module in a bypassed state of a discharge condition according to an embodiment of this application, FIG. 12 is a schematic diagram of a current path of an energy storage valve module in an inserted state of a charge condition according to an embodiment of this application, and FIG. 13 is a schematic diagram of a current path of an energy storage valve module in a bypassed state of a charge condition according to an embodiment of this application. As shown in FIG. 10 to FIG. 13, under the normal inserted or bypassed state during the operation of the energy storage valve module, the upper bridge arm fully-controlled tube 101A and the lower bridge arm unidirectional conduction tube 102B are mainly used for the discharge condition, and the upper bridge arm unidirectional conduction tube 101B and the lower bridge arm fully-controlled tube 102A are mainly used for the charge condition. However, when the energy storage valve module is in the inserted state, regardless of the charge condition or the discharge condition, the upper bridge arm fully-controlled tube 101A and the upper bridge arm unidirectional conduction tube 101B are mainly used. Therefore, typically, the upper bridge arm fully-controlled tube 101A and the upper bridge arm unidirectional conduction tube 101B of the energy storage valve module are in a heavy-load state, while the lower bridge arm fully-controlled tube 102A and the lower bridge arm unidirectional conduction tube 102B are in a light-load state.

FIG. 14 is a schematic diagram of the loss of different switching tubes of an energy storage valve module in a discharge condition according to an embodiment of this application. For an energy storage valve module with a set capacity, the backup power duration of the energy storage valve is related to the redundancy of the energy storage valve, to be specific, a ratio of the number of redundant energy storage valve modules to the target number. When the backup power duration is less than a preset duration, the redundancy of the energy storage valve module is small; the redundancy is inversely correlated with the probability of a single energy storage valve module in inserted state. When the redundancy is small, the probability of the energy storage valve module in inserted state is high, and the duration in the inserted state is relatively long, with the redundancy not exceeding 100%, for example, less than 60%, preferably less than 40%. As shown in FIG. 14, since the duration of the energy storage valve module in the inserted state of the discharge condition is generally longer than the duration in the bypassed state, the loss of the upper bridge arm fully-controlled tube 101A of the energy storage valve module in the discharge condition is greater than the loss of the lower bridge arm unidirectional conduction tube 102B.

FIG. 15 is a schematic diagram of the loss of different switching tubes of an energy storage valve module in a charge condition according to an embodiment of this application. As shown in FIG. 15, since the duration of the energy storage valve module in the inserted state of the charge condition is generally longer than the duration in the bypassed state, the loss of the upper bridge arm unidirectional conduction tube 101B of the energy storage valve module in the charge condition is greater than the loss of the lower bridge arm fully-controlled tube 102A.

It can be seen that since the losses of the lower bridge arm unidirectional conduction tube 102B and the lower bridge arm fully-controlled tube 102A are relatively small, the junction temperature rise caused by the losses is small, so using a lower bridge arm switching tube with a low nominal current can meet the operating junction temperature requirements of the lower bridge arm switching tube.

Considering the differences in current and losses of the upper and lower bridge arm switching tubes under different states of different operating conditions of the energy storage valve module, the embodiments of this application propose an energy storage valve module including an asymmetrically configured power module unit. For example, in the embodiments of this application, a model of the upper bridge arm switching tube 101 is different from a model of the lower bridge arm switching tube 102, and a load capacity operating parameter of the upper bridge arm switching tube 101 is greater than a load capacity operating parameter of the lower bridge arm switching tube 102. For example, in the embodiments of this application, a nominal current of the upper bridge arm switching tube 101 is greater than a nominal current of the lower bridge arm switching tube 102, and/or an operating junction temperature of the upper bridge arm switching tube 101 is greater than an operating junction temperature of the lower bridge arm switching tube 102.

Further, to balance heat dissipation and cost savings, the upper bridge arm fully-controlled tube 101A and the upper bridge arm unidirectional conduction tube 101B in the embodiments of this application may be discrete switching tubes, and the lower bridge arm fully-controlled tube 102A and the lower bridge arm unidirectional conduction tube 102B in the embodiments of this application may be integrated as an integrated switching tube.

For example, the upper bridge arm fully-controlled tube 101A and the upper bridge arm unidirectional conduction tube 101B may respectively be a discrete 4.5 kV/3 kA press-fitted type fully-controlled tube and a discrete 4.5 kV/3 kA press-fitted type unidirectional conduction tube, and the lower bridge arm fully-controlled tube 102A and the lower bridge arm unidirectional conduction tube 102B may be an integrated 4.5 kV/2 kA press-fitted type fully-controlled tube and unidirectional conduction tube.

For another example, the upper bridge arm fully-controlled tube 101A and the upper bridge arm unidirectional conduction tube 101B may respectively be a discrete 3 kV/2 kA press-fitted type fully-controlled tube and a discrete 3 kV/2 kA press-fitted type unidirectional conduction tube, and the lower bridge arm fully-controlled tube 102A and the lower bridge arm unidirectional conduction tube 102B may be an integrated 3 kV/1 kA press-fitted type fully-controlled tube and unidirectional conduction tube.

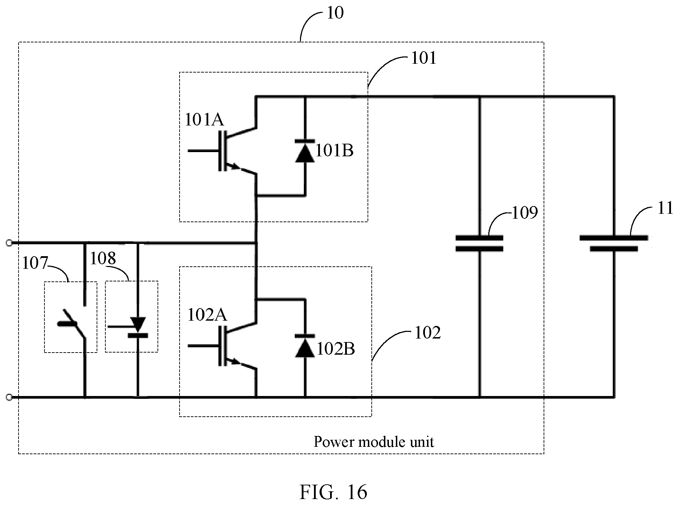

In some embodiments, FIG. 16 is a schematic structural diagram of an energy storage valve module according to some other embodiments of this application. As shown in FIG. 16, based on the above embodiments, the energy storage valve module in the embodiments of this application may include a second bypass unit 108 arranged in parallel with the first bypass unit 107 as a second circuit for bypass and short-circuit failure, so that when the energy storage valve module is in a bypass state, the current can flow through the first bypass unit 107 and the second bypass unit 108, thereby facilitating the protection of the power module unit.

In summary, by including an asymmetrically configured power module unit, the energy storage valve module in the embodiments of this application can, while meeting the load capacity requirements of the power module unit for the upper and lower bridge arm switching tubes, not only improve the utilization rate of the lower bridge arm switching tube but also save approximately 10% of the power device cost, approximately 10% of the cooling plate and cooling medium pipeline cost, approximately 3% of the power module unit cost, as well as reduce the size and weight of the energy storage valve (or valve string) composed of multiple energy storage valve modules by approximately 3%.

In some embodiments, an energy storage valve is further provided and includes multiple energy storage valve modules provided in the above embodiments of this application, where the multiple energy storage valve modules may be connected in series to a main circuit of the energy storage valve. The implementation principles and technical effects of the energy storage valve module in the embodiments of this application can refer to the relevant content in the above embodiments of this application, and are not repeated herein.

In some embodiments, an energy storage device is further provided and includes the energy storage valve provided in the above embodiments of this application, where the energy storage valve may include multiple energy storage valve modules provided in the above embodiments of this application, with similar implementation principles and technical effects, which are not repeated herein.

Finally, it should be noted that the above embodiments are only used to illustrate the technical solutions of this application, not to limit them; although this application has been described in detail with reference to the foregoing embodiments, those skilled in the art should understand that they can still modify the technical solutions recorded in the foregoing embodiments or make equivalent replacements for some or all of the technical features; and these modifications or replacements do not make the essence of the corresponding technical solutions depart from the scope of the technical solutions of the embodiments of this application, and they should all be covered within the scope of the claims and specification of this application. In particular, as long as there is no structural conflict, the various technical features mentioned in the embodiments can be combined in any way. This application is not limited to the specific embodiments disclosed herein but includes all technical solutions falling within the scope of the claims.

## Claims

1. A power module unit, comprising an upper bridge arm switching tube and a lower bridge arm switching tube connected in series; wherein a load capacity operating parameter of the upper bridge arm switching tube is greater than a load capacity operating parameter of the lower bridge arm switching tube.

2. The power module unit according to claim 1, wherein the load capacity operating parameter comprises nominal current and/or operating junction temperature.

3. The power module unit according to claim 1 or 2, wherein the upper bridge arm switching tube comprises an upper bridge arm fully-controlled tube and an upper bridge arm unidirectional conduction tube connected in parallel; and the lower bridge arm switching tube comprises a lower bridge arm fully-controlled tube and a lower bridge arm unidirectional conduction tube connected in parallel;
wherein a load capacity operating parameter of the upper bridge arm fully-controlled tube is greater than a load capacity operating parameter of the lower bridge arm fully-controlled tube; and/or
a load capacity operating parameter of the upper bridge arm unidirectional conduction tube is greater than a load capacity operating parameter of the lower bridge arm unidirectional conduction tube.

4. The power module unit according to claim 3, wherein the lower bridge arm fully-controlled tube and the lower bridge arm unidirectional conduction tube in the lower bridge arm switching tube are integrated as an integrated switching tube; and
the upper bridge arm fully-controlled tube and the upper bridge arm unidirectional conduction tube in the upper bridge arm switching tube are either discrete switching tubes or integrated switching tubes.

5. The power module unit according to claim 4, wherein the lower bridge arm fully-controlled tube and the lower bridge arm unidirectional conduction tube are integrated as an integrated switching tube through vertical press-fitting connection.

6. The power module unit according to claim 4, wherein the upper bridge arm fully-controlled tube is a press-fitted type fully-controlled tube, and the lower bridge arm fully-controlled tube is a press-fitted type fully-controlled tube; and/or
the upper bridge arm unidirectional conduction tube is a press-fitted type unidirectional conduction tube, and the lower bridge arm unidirectional conduction tube is a press-fitted type unidirectional conduction tube.

7. The power module unit according to any one of claims 3 to 6, wherein a cooling plate parameter of an upper cooling plate connected to the upper bridge arm switching tube is greater than a cooling plate parameter of a lower cooling plate connected to the lower bridge arm switching tube.

8. The power module unit according to claim 7, wherein the cooling plate parameter comprises at least one of the following: the number of cooling plates, contact area between a cooling plate and a switching tube, and cooling parameter of a cooling medium in a cooling plate.

9. The power module unit according to claim 7 or 8, wherein a first end of the upper bridge arm fully-controlled tube and a first end of the upper bridge arm unidirectional conduction tube are both connected to a first cooling plate, a second end of the upper bridge arm fully-controlled tube is connected to a second cooling plate, and a second end of the upper bridge arm unidirectional conduction tube is connected to a third cooling plate; and
a first end of the lower bridge arm switching tube is connected to the third cooling plate, and a second end of the lower bridge arm switching tube is connected to a fourth cooling plate.

10. The power module unit according to any one of claims 1 to 9, wherein the power module unit further comprises a first bypass unit and a second bypass unit connected in parallel with the lower bridge arm switching tube.

11. The power module unit according to any one of claims 1 to 10, wherein the upper bridge arm switching tube is an upper bridge arm of a half-bridge circuit, and the lower bridge arm switching tube is a lower bridge arm of the half-bridge circuit.

12. An energy storage valve module, comprising an energy storage unit and the power module unit according to any one of claims 1 to 9; wherein one end of the energy storage unit is connected to one end of the upper bridge arm switching tube, and another end of the energy storage unit is connected to one end of the lower bridge arm switching tube;
wherein a switching state of the upper bridge arm switching tube is used to control an inserted state of an operating condition of the energy storage valve module.

13. An energy storage valve, comprising multiple energy storage valve modules according to claim 12; wherein the multiple energy storage valve modules are connected in series to a main circuit of the energy storage valve.

14. An energy storage device, comprising the energy storage valve according to claim 13.
